# FASCICULE DE BREVET EUROPEEN

(11) **EP 2 305 561 B1**
(45) Date de publication et mention de la délivrance du brevet: **16.11.2011**
(21) Numéro de dépôt: 10009473.9
(22) Date de dépôt: 13.09.2010
(51) Int. Cl.: B64D 11/06, B64D 25/04

(54) **Siège pour appareils volants motorisés, intégrant des moyens de protection du passager en cas de crash**
Luftfahrzeugsitz mit Mitteln zum Schützen des Passagiers im Unfallsfall
Aircraft seat comprising passenger crash protection means

(30) Priorité: 30.09.2009 FR 0904669
(43) Date de publication de la demande: 06.04.2011
(73) Titulaire: EUROCOPTER, 13725 Marignane (FR)
(72) Inventeur: Honnorat, Olivier, 13090 Aix en Provence (FR)
(74) Mandataire: GPI & Associés

(56) Documents cités:
- EP-A1- 0 659 642
- FR-A1- 2 495 101
- US-A- 5 273 240

## Description

La présente invention est du domaine des appareils volants motorisés, avions et giravions notamment, et plus particulièrement du domaine des accessoires équipant de tels appareils. Elle a pour objet un siège pour appareils volants motorisés, qui intègre des moyens de protection des passagers en cas de chocs violents et/ou d'un brusque changement d'allure que subi l'appareil, notamment lors d'un crash.

Les sièges pour appareils volants motorisés, tels qu'avions, giravions, notamment hélicoptères ou appareils volants motorisés analogues, intègrent des moyens de protection du passager installé sur le siège en cas de crash. On comprendra par passager tout individu embarqué sur l'appareil, qu'il soit pilote ou personne transportée. De tels moyens de protection sont couramment constitués de moyens d'absorption d'énergie qui sont aptes à compenser les contraintes subis par le siège lorsqu'il est soumis à des chocs violents et/ou à une brusque décélération, notamment en cas de crash. Plus particulièrement, le siège est couramment organisé pour compenser des déformations du plancher de l'appareil, et pour absorber l'énergie induite par les efforts auxquels l'appareil est globalement soumis lors du crash. Selon une forme commune de réalisation, le siège associe un piètement et un baquet composé d'une assise rehaussée d'un dossier. Le piètement est ancré au plancher de l'appareil par l'intermédiaire de longerons, et comporte des montants qui sont solidaires des longerons et qui sont conjointement porteurs du baquet. La liaison entre le baquet et les montants est du type par brochage ou analogue, en étant réalisée par l'intermédiaire de goujons qui sont montés conjointement en prise sur le dossier et sur les montants.

Les directions et positions définies comme latérale associée à de côté, longitudinale associée à avant et arrière, transversale et en hauteur sont à prendre en considération au regard de la position du passager installé sur le siège.

II se pose alors le problème général d'agencement des moyens de protection du passager qui sont intégrés au siège. II est nécessaire que le baquet soit fermement maintenu sur le piètement dans des conditions normales de fonctionnement de l'appareil. Le siège doit être structuré pour pouvoir compenser les déformations du plancher et pour pouvoir absorber l'énergie induite par les efforts auxquels le siège est globalement soumis lors d'un crash en raison du brusque changement d'allure de l'appareil.

Plus particulièrement en cas de crash de l'appareil :
*) Une déformation du plancher provoque une déformation du piètement, et plus spécifiquement des longerons. Le siège doit être structuré pour compenser les effets sur le passager d'une déformation géométrique qui est de l'ordre communément admis et à titre indicatif inférieure à un écart angulaire de plus ou moins 10° environ. Cet écart angulaire est notamment à considérer de part et d'autre du plan d'installation initial du siège sur l'appareil. Pour éviter de complexifier la structure et d'accroître l'encombrement et la masse du siège, de telles déformations du plancher sont traditionnellement compensées à partir d'une distorsion du piètement et/ou de la souplesse du baquet. Cependant, de telles dispositions ne sont pas satisfaisantes car leur mise en oeuvre est souvent évaluée empiriquement à partir d'essais réalisés en laboratoire, au détriment d'une démarche rigoureuse qui est préférable compte tenu des exigences relatives à la protection des passagers. Une telle démarche conduit à une organisation du siège qui est spécifique à des cas prédéterminés de situations de crash et de modalités correspondantes de déformation estimée probable du piètement. Dans la pratique cependant, l'évolution d'un crash est aléatoire et est susceptible d'induire sur l'appareil, et sur les conditions de déformation du piètement, des effets incertains. II apparait souhaitable que la structure du siège soit organisée pour permettre de compenser les effets d'une déformation du piètement quelles que soient les contraintes que le siège peut subir en situation quelconque lors d'un crash.
*) L'appareil étant soumis à un brusque changement d'allure, et notamment à une forte décélération, le siège doit être organisé pour préserver le passager des effets de ce changement d'allure de l'appareil. Un mécanisme spécifique est traditionnellement exploité pour absorber l'énergie induite par les efforts importants auxquels est soumis globalement le siège lors du crash. Ce mécanisme d'absorption de l'énergie induite par un brusque changement d'allure de l'appareil est notamment interposé entre le piètement et le baquet. Par exemple, il est connu de monter le baquet coulissant sur les montants du piètement, de sorte qu'il puisse être mobile sous l'effet d'une force dont au moins l'une des composantes est orientée suivant l'axe de gravité et/ou transversalement au plancher de l'appareil. Un tel montage coulissant est réalisé à partir des goujons, qui sont en prise sur le dossier du baquet et qui sont aptes à circuler le long d'organes respectifs de guidage en translation, tels que rails ou glissières, que comportent les montants du piètement. Les goujons sont retenus à l'encontre de leur coulissement le long des montants par des moyens déformables de retenue, de sorte que le baquet soit fermement maintenu en situation normale de fonctionnement de l'appareil mais que les contraintes induites sur l'appareil en cas de crash provoquent une déformation des moyens de retenue par l'intermédiaire desquels le baquet est porté par le piètement.

Pour connaître un environnement technologique de la présente invention, on pourra se reporter aux documents FR2683191 (ISRAEL AIRCRAFT INDUSTRIES Ltd), DE4312343 (EUROCOPTER D. Gmbh) ou EP0814020 (MARTIN-BAKER AIRCRAFT Co Ltd). Le document FR2495101, qui décrit toute les caracteriques du préamblue de la revendicatin 1, est considéré l'état de la technique le plus proche.

Par ailleurs, il est avantageux que les dispositions prévues pour protéger les passagers en cas de crash de l'appareil soient obtenues en prenant en compte des exigences suivantes relatives à :
*) l'encombrement du siège, qui doit être réduit au mieux, notamment latéralement et vers l'arrière pour procurer un gain de place optimisé. Pour un nombre de sièges donnés équipant l'appareil, un encombrement individuel réduit de ces sièges permet d'éviter une gêne pour des passagers installés sur des sièges voisins, et favorise l'agencement d'espaces de circulation et/ou de rangements dans l'appareil. En outre pour une capacité d'accueil donnée de l'appareil volant, un encombrement réduit du siège favorise l'accroissement du nombre de sièges et l'aisance de leur implantation à l'intérieur d'un quelconque appareil volant.
*) la structure du siège qui doit être la plus simple possible, pour éviter d'accroître sa masse ce qui est préjudiciable pour un appareil volant. En outre une simplicité de structure permet une obtention du siège à moindres coûts, et facilite les éventuelles opérations de maintenance.
*) la ou les facultés de réglage en position du siège par le passager, tels que son réglage en position de hauteur initiale et/ou en position longitudinale vers l'avant et/ou vers l'arrière. L'agencement des moyens de protection du passager ne doit pas faire obstacle ni induire outre mesure une complexification des moyens exploités pour de tels réglages, afin d'éviter un accroissement de l'encombrement et de la masse du siège, et/ou de rendre malaisée la manoeuvre de ces moyens de réglage par le passager.

Le but de la présente invention est de proposer un siège pour appareil volant motorisé, qui intègre des moyens de protection du passager installé sur le siège en cas de choc violent subi par l'appareil, notamment en cas de crash. II est plus particulièrement visé par la présente invention de proposer un tel siège intégrant un mécanisme spécifiquement dédié à la protection du passager au regard d'une déformation du plancher, quelles que soient les contraintes qui produisent une telle déformation. Un tel mécanisme est recherché de sorte qu'il satisfasse au moins aux exigences et dans le cadre des problèmes à résoudre et des difficultés à surmonter qui ont été énoncées. Un tel mécanisme est en outre recherché de sorte qu'il soit avantageusement apte à fonctionner indépendamment et/ou en coopération avec un autre mécanisme spécifiquement dédié à la protection du passager au regard d'un brusque changement d'allure de l'appareil en cas de crash.

Le siège de la présente invention est agencé pour équiper un appareil volant motorisé, tel qu'un avion ou un giravion, en vue de protéger un passager installé sur le siège en cas d'un brusque changement d'allure et/ou en cas de choc lors d'un crash de l'appareil. On rappelle que pour un tel type d'appareil, les chocs auxquels il est soumis sont notamment principalement exercés suivant l'axe général de gravité, mais aussi suivant des directions transversales susceptibles d'être quelconques par rapport à cet axe général de gravité. Ces chocs soumettent le siège à des contraintes importantes en présentant néanmoins des composantes avant et/ou latérales selon la position et l'orientation d'installation du siège dans l'appareil, et selon l'orientation de l'appareil par rapport au sol lors du crash. De telles contraintes tendent à induire une déformation du plan d'installation du siège à l'intérieur de l'appareil, matérialisé par son plancher. Le siège comprend principalement un baquet en maintien hyperstatique sur un piétement. Le baquet est composé d'une assise rehaussée d'un dossier et le piètement comprend des longerons d'ancrage du siège en position d'utilisation sur un plan d'installation, notamment le plancher de l'appareil. Le maintien hyperstatique du baquet correspond plus particulièrement à son soutien par le piètement à partir de plusieurs points ou zones de prise qui sont répartis latéralement et suivant la hauteur du baquet. Ces points de prise sont de préférence au nombre de quatre, et sont répartis par couples latéralement distants. Les points de prise de chaque couple sont plus particulièrement répartis en zone haute et en zone basse du baquet en position d'utilisation du siège, et plus spécifiquement en zone haute et en zone basse du dossier. Des montants sont respectivement solidaires des longerons que comprend le piètement, et sont conjointement porteurs par brochage du baquet par l'intermédiaire de goujons axialement étendus. L'une des extrémités de chacun des goujons est en prise sur une armature du dossier tandis que leur autre extrémité est en prise sur un montant dédié. Les montants sont latéralement distants pour répartir les dits points de prise, en étant disposés de préférence à l'arrière du baquet. L'armature équipant le dossier est susceptible d'être principalement constituée d'un couple de poutres ou organes analogues en prise sur l'assise et le dossier, chacune de ces poutres étant affectée à un montant dédié pour soutenir le baquet en maintien hyperstatique.

Le siège de la présente invention est plus spécifiquement équipé d'un premier mécanisme articulé de compensation géométrique d'une déformation du plancher quelles que soit l'orientation des efforts auxquels est soumis le piètement et quelle que soit l'ampleur de ces efforts dans une plage de contraintes prédéterminée. Plus précisément, ce premier mécanisme est un mécanisme articulé qui est spécifiquement apte à compenser une déformation du plancher, de sorte que le plan d'assise pour le passager demeure sensiblement constant en cas d'une déformation du piètement. Une telle déformation du piètement correspond à celle couramment admise dans le domaine des appareils volants au regard de la sécurité du passager, à savoir un basculement angulaire des longerons de part et d'autre du plan d'installation du siège de l'ordre de 10°.

Le premier mécanisme proposé par la présente invention associe un montage en rotule des goujons avec leur agencement en déformation axiale. Le montage en rotule des goujons est de préférence réalisé sur ledit montant dédié, mais est susceptible d'être indifféremment ménagé sur le montant dédié ou sur l'armature du dossier. L'agencement en déformation axiale des goujons est plus particulièrement ménagé entre des appuis axiaux antagonistes qu'ils prennent contre l'armature du dossier et le montant dédié.

Le montage en rotule des goujons et leur aptitude à se déformer axialement en conséquence permet de compenser une déformation du plancher, quelle que soit cette déformation induite par des efforts susceptibles d'être exercés suivant de quelconques directions et de manière aléatoire. Un passager installé sur le siège est protégé d'une quelconque déformation du plancher, y compris une déformation n'ayant pas fait l'objet d'un examen préalable, notamment par essai. La structure du premier mécanisme est simple, aisée à obtenir à partir d'un aménagement peu coûteux des goujons, n'induit pas ou très peu d'encombrement dans la zone de jonction entre le piètement et le baquet, ni d'apport de masses supplémentaires significatives. En outre, l'organisation du premier mécanisme ne fait pas obstacle à l'aménagement simple et aisé d'autres équipements du siège, tels qu'un deuxième mécanisme d'absorption d'énergie induite par un brusque changement d'allure de l'appareil, et/ou des moyens de réglage de la position initiale en hauteur du baquet.

Les goujons sont aptes à s'incliner dans une quelconque direction tout en restant en appuis antagonistes positifs contre les montants et l'armature du dossier. L'aptitude des goujons à s'incliner est déterminée selon leur aptitude à se déformer axialement entre deux positions extrêmes de butée. Ces positions extrêmes de butée correspondent respectivement à une position des longerons lorsque le siège est installé dans l'appareil suivant le dit plan d'installation, et une position déformée maximale autorisée des longerons par rapport à ce plan d'installation. La simplicité de la structure du premier mécanisme permet d'optimiser la course utile en déformation axiale des goujons, pour répondre aux exigences de compensation d'une déformation des longerons correspondant au dit écart angulaire de 10° environ par rapport au plan d'installation. L'association du montage des goujons en rotule et leur capacité à se déformer axialement implique que leur mouvement relatif par rapport au montant dédié ou à l'armature du dossier peut être aisément contrôlé. Les prises d'appui axiales que prennent les goujons contre les montants et l'armature du dossier perdurent de manière positive, c'est-à-dire en appui ferme et contrôlé, quelle que soit l'inclinaison du goujon dans la plage prédéterminée de sa déformation axiale autorisée. En cas d'une déformation d'un longeron provoquée par une déformation du plan d'installation du siège sur l'appareil, le baquet ne tend pas à accompagner le piètement dans sa déformation ni à se déformer lui-même malgré son maintien hyperstatique. Le montage en rotule des goujons permet de diminuer les contraintes de torsion auxquelles le baquet serait sinon soumis en cas de déformation du plan d'installation du siège, et cela quelle que soit l'orientation des efforts que supporte les longerons lors de leur déformation. Les prises d'appui axial antagonistes que prennent les goujons entre leurs deux positions extrêmes de déformation axiale garantissent d'une part un maintien ferme du baquet en situation normale d'utilisation du siège en l'absence d'une déformation des longerons, et d'autre part un maintien ferme du baquet postérieurement à une déformation du plan d'installation du siège. Le fonctionnement du premier mécanisme, les conditions de sa mise en oeuvre et le maintien ferme du baquet en station normale d'assise pour le passager sont obtenus, indépendamment et y compris dans le cas d'une mise en oeuvre éventuelle d'un deuxième mécanisme d'absorption d'énergie spécifiquement dédié à la protection du passager à partir d'un déplacement relatif en translation entre les montants et l'armature du dossier suivant leur direction générale d'extension. Plus particulièrement, les déformations du plancher sont spécifiquement prises en compte par le premier mécanisme, qui est apte à être mis en oeuvre indépendamment de la mise en oeuvre éventuelle d'un deuxième mécanisme d'absorption d'énergie induite par un brusque changement d'allure de l'appareil.

La dite déformation du piètement correspondante à un débattement angulaire du longeron de l'ordre de 10° de part et d'autre du plan d'installation du siège est donnée à titre indicatif et est adaptable selon les besoins et/ou selon les contraintes et les exigences de sécurité requises. L'organisation du premier mécanisme rend une telle adaptation aisée, à partir d'un réglage structurellement simple à réaliser de l'aptitude du goujon à se déformer axialement entre les dites positions de butée extrêmes. Un tel débattement angulaire de l'ordre de 10° du longeron, induit une modification de position entre le baquet et le montant correspondant de l'ordre de 1/cos 10°, soit 1,5%. La course en déformation axiale des goujons est en conséquence réduite et aisément contrôlable, et peut être structurellement simplement obtenue en interposant des moyens élastiques entre l'un et/ou l'autre des appuis que prennent les goujons contre le montant dédié et/ou le dossier, et en autorisant un coulissement des goujons à l'intérieur de l'un au moins de ces derniers montants. De tels moyens élastiques sont susceptibles d'être d'une robustesse apte à maintenir le baquet en maintien hyperstatique ferme et stable, sans complexifier pour autant leur structure.

Plus particulièrement, les goujons sont axialement déformables suivant une course prédéfinie entre deux positions axiales de butée, qui correspondent à des seuils extrêmes prédéfinis et respectifs de déformation axiale des goujons en fonction des dites exigences de sécurité requises.

La portée sphérique des goujons indifféremment sur le montant dédié ou sur l'armature du dossier est de préférence limitée à une plage comprise entre 3° et 7°, pour éviter un encombrement inutile du premier mécanisme, et notamment des goujons et des logements qui les reçoivent respectivement. Une telle restriction de la portée sphérique des goujons est rendue possible par les modalités de mise en oeuvre du premier mécanisme, qui sont avantageusement contrôlées par la course prédéfinie de déformation axiale des goujons.

Selon une forme avantageuse de réalisation, les goujons sont chacun agencés en :
*) un axe de basculement muni d'épaulements de prise d'appuis axiaux antagonistes contre le montant et l'armature du dossier. L'axe de basculement est doté d'une tête de rotule apte à coopérer avec un logement ménagé indifféremment dans l'armature du dossier ou dans le montant dédié, et
*) au moins un manchon élastique axialement déformable enfilé sur l'axe de basculement en interposition axiale entre l'un quelconque au moins des dits épaulements et respectivement le montant dédié et l'armature du dossier contre lequel il prend appui.

Selon une forme avantageuse de réalisation, le manchon élastique est composé d'un jeu de rondelles empilées et conformées en assiette du type dit « Belleville ».

De préférence, les logements de réception des dites têtes de rotule sont des logements borgnes aptes à interdire une échappée de l'extrémité correspondante des axes de basculement hors des logements qui les reçoivent. Une telle échappée est susceptible d'intervenir sous l'effet d'une déformation du piètement et/ou sous l'effet des différents efforts supportés par le siège lors du crash, qui risquent de provoquer une déformation des parois des logements. Pour ménager de tels logements borgnes sans faire obstacle et/ou rendre malaisé le montage des goujons, ni sans accroître outre mesure la masse du siège, les logements comportent une ouverture vers l'extérieur autorisant leur traversée pour le montage des goujons. Cette ouverture est munie d'un capot rapporté ou organe analogue de fermeture des logements et de renfort de leurs parois. Un tel capot permet de conserver la forme géométrique des logements malgré les efforts supportés par le siège et de garantir l'éventuelle mise en oeuvre d'un dit deuxième mécanisme, notamment dans le cas où ce dernier exploite les goujons que comprend le premier mécanisme. Une telle fermeture des logements est notamment opérée sur les logements situés en position basse du dossier, cette zone étant celle principalement sollicitée lors d'une déformation du plan d'installation du siège. Cependant, il est préféré d'équiper chacun des logements d'un tel capot, y compris les logements situés en position haute du dossier, pour ne pas affecter la rigidité du siège latéralement et éviter tout risque de déversement latéral du baquet lors du crash.

Les goujons sont susceptibles d'être montés de manière équivalente et indifférente sur les montants dédiés ou sur l'armature du dossier. II est cependant préféré une forme de réalisation selon laquelle les goujons sont montés en rotule à l'intérieur d'un dit logement que comportent les montants et sont montés coulissant à l'intérieur d'un évidement axial que comporte l'armature du dossier, notamment entre les deux dites positions de butées. Une telle répartition entre les montants et l'armature du dossier des modalités de montage des goujons facilite leur exploitation pour l'intégration dans le siège d'un dit deuxième mécanisme spécifiquement dédié à l'absorption d'énergie induite par le brusque changement d'allure de l'appareil lors du crash.

Le siège est préférentiellement équipé d'un dit deuxième mécanisme d'absorption d'énergie induite par un brusque changement d'allure de l'appareil et à laquelle est soumis le siège.

Un tel deuxième mécanisme comprend avantageusement au moins deux jeux d'organes qui associent chacun un fusible de retenue du baquet en maintien hyperstatique et un organe déformable de soutien du baquet. Chaque jeu d'organes est conjointement en prise sur un montant dédié et sur l'armature du dossier.

Le fusible permet de tarer le seuil de mise en oeuvre du deuxième mécanisme. Les fusibles sont notamment des organes aptes à se rompre sous l'effet d'efforts importants supportés par le siège lors d'un crash, et sont résistants sous l'effet des efforts induits par l'installation sur le siège d'un passager témoin.

Selon une forme avantageuse de réalisation, les goujons que comprend le premier mécanisme son exploités au moins par couple en étant latéralement répartis pour le montage du deuxième mécanisme. Plus particulièrement, le fusible et l'organe de soutien de chacun des jeux d'organes sont avantageusement en prise sur un goujon qui leur est affecté et sur le montant dédié. Le logement de réception de la tête de rotule du goujon s'étend le long de ce montant dédié. Les jeux d'organes sont implantés indifféremment en position haute, en position basse et/ou conjointement en position haute et en position basse du dossier.

Le fusible est par exemple agencé en une barrette munie d'une zone de fragilisation. L'organe de soutien déformable est agencé en ressort globalement plat qui est plastiquement déployable par écartement les uns des autres de barreaux successifs qui le composent.

De préférence, le siège est équipé de moyens de réglage de la position du baquet en hauteur.

Selon une forme avantageuse de réalisation, les moyens de réglage de la position du baquet en hauteur comprennent un mécanisme de crantage. Un tel mécanisme de crantage associe notamment au moins un jeu de deux doigts de crantage porteurs du baquet et chacun affectés à un montant dédié, avec des crans en pluralité de réception alternative des doigts de crantage qui sont ménagés successivement le long de chacun des montants. Les crans d'une pluralité sont de préférence ménagés à travers une platine rapportée sur un montant dédié. La platine est apte à être formée dans un matériau robuste, tel que l'acier, qui est analogue au matériau des doigts de crantage et qui est différent du matériau à partir duquel sont formés les montants, les dits montants pouvant être avantageusement formés en alliage d'aluminium par exemple ou autre alliage réputé léger. Une dégradation des doigts de crantage suite à des manoeuvres répétées est évitée, et le piètement peut être obtenu à partir d'un matériau plus léger, tel que l'aluminium, sans risque d'être fragilisé par la présence des crans. Les logements respectivement affectés pour un même montant aux goujons implantés en position haute et basse du dossier sont de préférence fusionnés en un logement commun étendu le long du montant correspondant. Le passage d'un quelconque doigt de crantage entre deux crans de la pluralité qui lui est affecté est réalisé à partir d'un montage mobile des doigts de crantage le long des montants.

Chacun des doigts de crantage est avantageusement porteur du baquet par l'intermédiaire d'un goujon qui leur est affecté et sur lequel ils sont en prise.

Les doigts de crantage sont avantageusement en prise sur les goujons par l'intermédiaire des deuxièmes mécanismes correspondants.

De préférence, les doigts de crantage sont guidés en mobilité par l'intermédiaire de coulisseaux qui les supportent respectivement. Ces coulisseaux sont montés mobiles le long de glissières correspondantes, ou organes analogues de guidage en translation, qui sont ménagés à travers les montants.

Selon une forme avantageuse de réalisation, de telles glissières sont le cas échéant constituées par les logements de réception des goujons par les montants, qui s'étendent le long des montants sur notamment la quasi-totalité de leur hauteur. Plus particulièrement, les dits coulisseaux constituent en outre des organes de prise sur les montants des jeux d'organes du deuxième mécanisme, et les glissières de réception des coulisseaux sont constituées par les logements de réception des goujons.

Les moyens de réglage de la position du baquet en hauteur comprennent de préférence des moyens de manoeuvre des doigts de crantage entre deux positions. Une première position est une position spontanée de crantage dans laquelle les doigts de crantage sont reçus par l'un des dits cran de la pluralité correspondante. Une deuxième position est une position de dégagement dans laquelle les doigts de crantage sont extraits hors des crans.

Selon une forme préférée de réalisation, les moyens de manoeuvre des doigts de crantage comprennent un organe de traction des doigts de crantage en position de dégagement à l'encontre d'un effort antagoniste exercé par un organe élastique de manoeuvre spontanée des doigts de crantage en position de crantage. L'organe de traction est par exemple du type à tirette manoeuvrable manuellement ou autre organe de traction analogue.

Les moyens de réglage de la position du baquet en hauteur comprennent avantageusement au moins un organe de manoeuvre du baquet en position de hauteur.

De préférence, l'organe de manoeuvre du baquet est un organe de manoeuvre spontanée du baquet vers une position haute optimale, qui est taré à une force prédéterminée correspondant notamment au poids d'un passager témoin installé sur le siège. La force prédéterminée de tarage de l'organe de manoeuvre du baquet est inférieure à celle de tarage du fusible provoquant sa rupture. Selon une forme avantageuse de réalisation, l'organe de manoeuvre du baquet est constitué d'un vérin pneumatique ou autre organe à déformation élastique analogue.

L'organe de manoeuvre du baquet est avantageusement placé dans le soubassement du siège délimité entre les longerons. De telles dispositions permettent de loger les moyens de réglage en hauteur du baquet dans l'encombrement hors tout du siège. L'organe de manoeuvre du baquet est notamment en prise sur au moins l'un des doigts de crantage par l'intermédiaire d'un câble circulant le long d'un jeu de poulies de renvoi, ou organes analogues, montés sur le piètement.

Des exemples de réalisation de la présente invention vont être décrits en relation avec les figures des planches annexées, dans lesquelles :
- les fig.1, fig.2 et fig.3 sont des illustrations d'un siège de la présente invention, respectivement en vue isométrique latérale, en vue isométrique arrière et en coupe arrière.
- la fig.4 est un détail d'un siège de la présente invention, qui illustre le montage d'un goujon exploité pour des mécanismes de protection d'un passager en cas de crash d'un appareil volant équipé de ce siège.
- la fig.5 est une vue en perspective arrière d'un siège du type représenté sur les fig.1 à fig.3 dépouillé d'un baquet qu'il comporte, qui illustre des moyens équipant le siège pour le réglage en hauteur de ce baquet.
- la fig.6 est un détail de la fig.5 qui illustre un mécanisme de crantage que comprennent les moyens de réglage en hauteur du baquet.

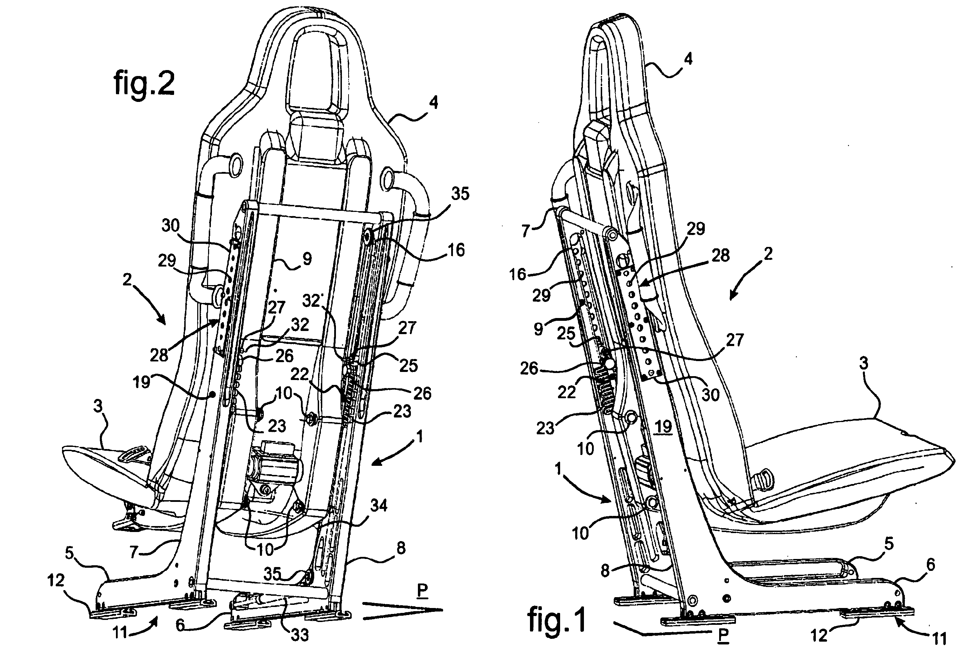

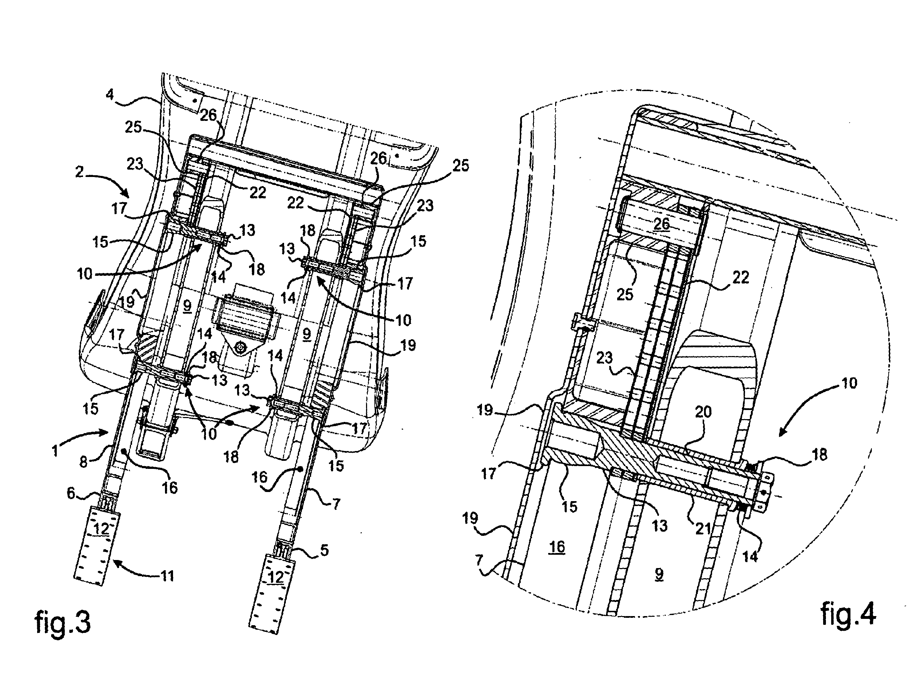

Sur les fig.1 à fig.3, un siège est destiné à équiper un appareil volant motorisé en étant agencé pour protéger le passager installé sur ce siège en cas de choc violent et plus particulièrement en cas de crash de l'appareil. Ce siège est principalement composé d'un piètement 1 qui soutien en maintien hyperstatique un baquet 2 associant une assise 3 et un dossier 4. Le piètement 1 est principalement composé d'un couple de longerons 5,6 latéralement distants qui définissent entre eux un plan P d'installation du siège sur le plancher de l'appareil. Ces longerons 5,6 sont chacun prolongés par des montants respectifs 7,8 qui s'étendent à l'arrière du dossier 4 pour soutenir le baquet 2. Le baquet 2 est équipé d'une armature 9 composée de poutres qui s'étendent sous l'assise 3 et à l'arrière du dossier 4. Les poutres de cette armature 9, dans leur zone de jonction au dossier 4, s'étendent le long des montants 7,8 pour leur liaison deux à deux les uns aux autres par brochage au moyen de goujons 10. Pour conforter le maintien hyperstatique du baquet 2, ces goujons 10 sont au nombre de quatre, latéralement répartis par couple, et pour chaque couple sont placés en zone haute et en zone basse du dossier 4 au regard de la position d'utilisation du siège.

De préférence, le siège est équipé de moyens 11 de réglage en position longitudinale vers l'avant et/ou vers l'arrière par rapport à l'orientation du passager installé sur le siège. Ces moyens de réglage 11 en position longitudinale comprennent dans leur globalité des rails 12 ou organes analogues, qui sont munis d'organes de fixation au plancher de l'appareil et qui reçoivent en coulissement les longerons 5,6. Le siège est susceptible d'être équipé de moyens de manoeuvre dédiés au coulissement des longerons 5,6 le long des rails 12.

Sur les fig.1 à fig.6, le siège est équipé d'un premier mécanisme de compensation géométrique d'une déformation du plancher, qui sont dédiés à la protection du passager en cas de déformation du plan d'installation P du siège consécutivement à une déformation du plancher de l'appareil. La protection du passager que procurent le premier mécanisme est mise en oeuvre dans une plage donnée de résistance à la déformation du siège, correspondante à un basculement longitudinal d'un quelconque longeron de l'ordre de 10° de part et d'autre du plan d'installation P du siège. Les goujons 10 sont axialement déformables sous l'effet d'une contrainte exercée sur le siège consécutivement à une déformation des longerons 5,6 dans la plage visée. La déformation élastique des goujons 10 est limitée entre deux positions de butée, l'une en position déployée des goujons 10 et plus particulièrement de l'organe 14 correspondant à une condition d'utilisation normale du siège, l'autre en position rétractée extrême des goujons 10 et plus particulièrement de l'organe 14 correspondant à une déformation de l'un au moins des longerons 5,6 dans la plage visée de plus ou moins 10° de part et d'autre du plan d'installation P du siège sur l'appareil, défini par l'orientation initiale des longerons 5,6.

Les goujons 10 sont chacun agencés en un couple d'organes, comprenant un axe de basculement 13 et un manchon élastique 14 axialement déformable enfilé sur l'axe de basculement 13. Ce manchon élastique 14 est composé d'un jeu de rondelles empilées et indépendamment déformables, qui sont conformées en assiette du type dit « Belleville ». L'axe de basculement 13 comporte une tête de rotule 15, qui est reçue dans un logement dédié 16 que comportent les montants 7,8. Ces logements 16 présentent chacun une extension le long des montants 7,8 au moins suffisante pour tolérer une mobilité omnidirectionnelle des axes de basculement 13 de l'ordre de plus ou moins 5°. La conformation de la tête de rotule 15 des axes de basculement 13 est limitée à une faculté de basculement du même ordre. Une telle plage de mobilité omnidirectionnelle des axes de basculement 13 est suffisante pour permettre un fonctionnement du premier mécanisme dans la plage de déformation visée des longerons 5,6. Les axes de basculement 13 comportent des épaulements 17,18 à chacune de leurs faces de bout, pour prendre des appuis antagonistes contre les montants 7,8 et l'armature 9 du dossier 4. L'un des épaulements 17 est formé d'usinage, tandis que l'autre épaulement 18 est obtenu par apport d'une rondelle ou organe analogue en bout de l'axe de basculement 13. Le manchon élastique 14 est interposé entre l'un de ces épaulements 17,18, et sur l'exemple de réalisation illustré l'armature 9 du dossier. En cas de déformation de l'un au moins des longerons 5,6, au moins l'un des axes de basculement 13 pivote dans le logement 16 du montant 7,8 qui le reçoit, avec pour effet d'induire sa déformation élastique en compression et son coulissement à l'intérieur d'un évidement 20 que comporte l'armature 9 du dossier 4. Pour conforter le montage coulissant de l'axe de basculement 13 sur l'armature 9 du dossier 4, l'axe de basculement 13 s'étend à l'intérieur d'une douille 21 rapportée à l'intérieur de cette armature 9. Lors de la déformation axiale d'un goujon 10 jusqu'à sa position de compression extrême de l'organe 14, les appuis axiaux antagonistes que prend ce goujon 10 contre le montant correspondant 7 et l'armature 9 du dossier 4 perdurent, et le soutien hyperstatique du baquet 2 en position normale d'utilisation est maintenu.

Les logements 16 de réception des goujons 10 ménagés à travers les montants 7,8 sont ouverts vers l'extérieur pour faciliter le montage des goujons 10. Pour éviter une déformation des logements 16 sous l'effet des contraintes subies par le siège lors d'un crash, chacune de ces ouvertures est préférentiellement fermée par un capot rapporté 19, qui constitue en outre un organe de renfort des parois bordant les logements 16. De tels capots 19 permettent de renforcer les logements 16 pour éviter leur déformation par écartement de leurs parois, et pour interdire une échappée indésirable de la tête de rotule 15 hors des logements 16, qui sinon serait susceptible d'être rendue possible en cas de déformation des parois des logements 16.

Le siège est en outre équipé d'un deuxième mécanisme d'absorption d'énergie induite par un brusque changement d'allure de l'appareil volant lors d'un crash, en vue de protéger le passager de ce brusque changement d'allure, décélération notamment. Ce deuxième mécanisme est plus particulièrement agencé pour autoriser un déplacement relatif entre le baquet et le piètement suivant la direction d'extension des montants, tout en maintenant le soutien hyperstatique du baquet 2. Les mises en oeuvre respectives du premier mécanisme et du deuxième mécanisme sont indépendantes, malgré la mise en commun avantageuse des organes qu'ils comportent, goujons 10 et logements 16 notamment. Plus particulièrement, le deuxième mécanisme est apte à être mis en oeuvre antérieurement, simultanément ou postérieurement à la mise en oeuvre du premier mécanisme. Le deuxième mécanisme comprend deux jeux d'organes qui associent chacun un fusible 22 de retenue du baquet 2 et un organe de soutien plastique 23 du baquet 2. Ces jeux d'organes 22,23 sont latéralement répartis pour être individuellement en prise sur le baquet 2 et sur un montant dédié 7,8. Les fusibles 22 sont agencés en barrettes ou organes analogues, qui comportent une zone de fragilisation 24 apte à être rompue à partir d'un seuil de rupture. Ce seuil de rupture est prédéterminé selon un seuil optimal toléré de contraintes exercées sur le siège. Les organes de soutien plastique 23 du baquet 2 sont globalement plats en étant disposés le long d'un montant dédié 7,8, et sont étirables sous l'effet du poids du baquet 2 augmenté du poids du passager. De telles formes de réalisation des fusibles 22 et/ou des organes de soutien à déformation plastique 23 sont préférées et illustrées pour exemple, d'autres moyens analogues étant susceptibles d'être mis en oeuvre. Par exemple, l'organe de soutien 23 du baquet 2 est susceptible d'être constitué d'un vérin pneumatique spontanément fermé, muni d'un clapet taré formant fusible apte à libérer le vérin pneumatique en déploiement à partir d'un certain seuil de résistance.

Les jeux d'organes associant chacun un fusible 22 et un organe de soutien plastique 23, sont en prise sur un montant dédié 7,8 et sur l'armature 9 du dossier 4. La prise des jeux d'organes 22,23 sur le montant dédié 7,8 est réalisée par l'intermédiaire d'une broche 26 qui est reçu par le montant dédié 7,8. La prise des jeux d'organes 22,23 sur l'armature 9 du dossier 4 est réalisée par l'intermédiaire des goujons 10. Les logements 16 de réception des têtes de rotule 15 sont étendus le long du montant correspondant 7,8, en étant de préférence fusionnés de l'un à l'autre de ces logements 16 en un logement commun recevant les deux goujons 10 affectés à un même côté du baquet 2. Les logements 16 sont agencés en couloir de circulation des goujons 10 par l'intermédiaire des têtes de rotule 15 qu'ils comportent. Selon l'exemple préféré de réalisation représenté, les logements 16 sont formés par l'évidement d'une glissière issue d'un profilé conformé en U ou analogue. Le capot 19 est constitué d'une plaque rapportée, par soudage ou par scellement notamment, contre l'ouverture de la glissière pour sa fermeture et pour le renfort des ailes du profilé.

Lors d'un crash, le siège est soumis à une énergie induite par la brusque décélération de l'appareil. Le fusible 22 cède et le baquet 2 est porté par les organes de soutien plastique 23. L'étirement des organes de soutien plastique 23 autorise une descente du baquet 2 le long des montants 7,8, d'une course prédéterminée par l'allongement des organes de soutien 23 selon le poids du passager et l'énergie à absorber. Le baquet 2 est guidé dans sa chute par les goujons 10 qui circulent le long des logements 16 qui les reçoivent respectivement. Le maintien hyperstatique du baquet 2 est conservé et le passager est protégé à partir de l'absorption d'énergie fournie par les organes de soutien 23.

Sur les fig.1, fig.2, fig.5 et fig.6, le siège est avantageusement équipé de moyens de réglage en hauteur de la position du baquet en situation normale d'utilisation. Ces dispositions visent à apporter un confort au passager, notamment lorsque celui-ci est un pilote de l'appareil. Ces moyens de réglage de la position du baquet en hauteur comprennent un mécanisme de crantage qui met en oeuvre un jeu de deux doigts de crantage 27 respectivement affectés à un montant dédié 7,8. Pour faciliter l'intégration dans le siège des moyens de réglage en hauteur sans complexifier outre mesure sa structure ni accroitre son encombrement, le mécanisme de crantage est interposé entre le piètement 1 et le baquet 2 en exploitant des organes que comprend le premier mécanisme et le deuxième mécanisme. Plus particulièrement, les doigts de crantage 27 sont porteurs du baquet 2 par l'intermédiaire des goujons 10, des fusibles 22 et des broches 26 auxquelles les doigts de crantage 27 sont reliés par l'intermédiaire d'un coulisseau 25 correspondant. Les coulisseaux 25 sont reçus par les logements 16 de réception des goujons 10 le long desquels ils sont aptes à circuler. Les doigts de crantage 27 sont individuellement coopérant avec une pluralité 28 de crans 29 qui leur est affectée. Ces pluralités 28 de crans 29 sont constituées de trous qui sont ménagés à travers des platines 30 respectives rapportées sur l'un et l'autre des montants 7,8. Les doigts de crantage 27 sont manoeuvrables entre une position spontanée de crantage alternativement à l'intérieur de l'un ou l'autre des crans 29 de la pluralité 28 qui leur est affectée, et une position de désengagement des doigts de crantage 27 hors des crans 29. Les doigts de crantage 27 sont maintenus en position spontanée de crantage par l'intermédiaire d'un organe élastique de rappel dédié 31, et sont extractibles par des moyens de manoeuvre 32 en position de désengagement à l'encontre de l'effort exercé par l'organe élastique 31. Ces moyens de manoeuvre 32 des doigts de crantage sont du type à tirette ou analogue, et associent par exemple un premier câble de traction en prise sur les doigts de crantage 27 et une poignée de traction exercée sur le premier câble par le passager par exemple.

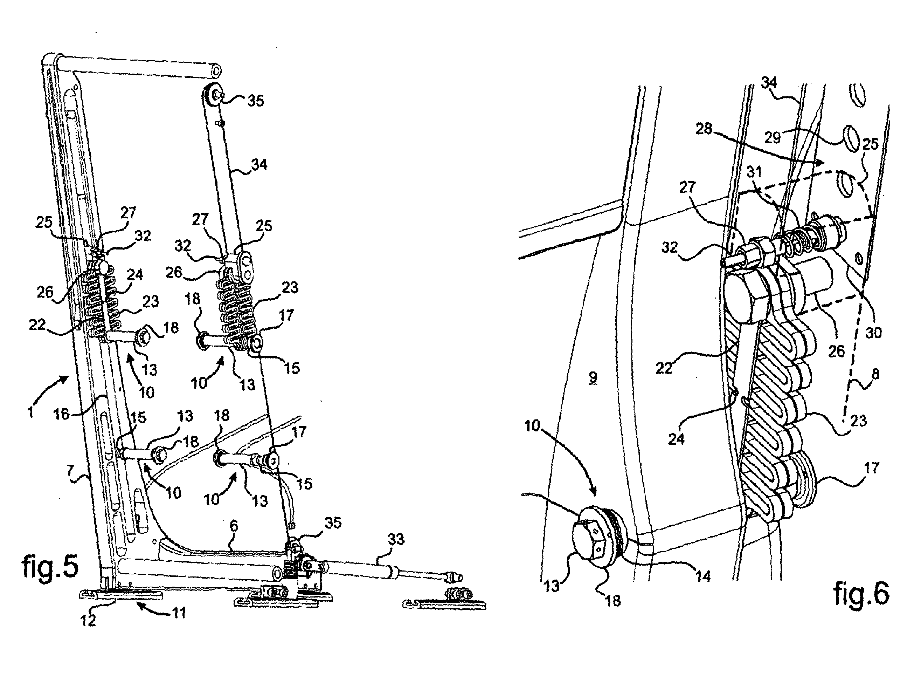

Sur la fig.5 notamment, les moyens de réglage de la position du baquet 2 en hauteur comprennent encore au moins un organe de manoeuvre 33 du baquet 2 en position spontanée de hauteur optimale. Cet organe de manoeuvre 33 du baquet 2 est en prise sur ce dernier et est taré à une force prédéterminée selon le poids maximum toléré d'un passager. Sur l'exemple avantageux de réalisation illustré, l'organe de manoeuvre 33 du baquet 2 est constitué d'un vérin pneumatique logé dans le soubassement du siège délimité entre les longerons 5,6. Cet organe de manoeuvre 33 est spontanément manoeuvrable à la fermeture et est relié au baquet 2 par l'intermédiaire d'un deuxième câble de traction 34, qui circule sur un jeu de poulies de renvoi 35 portées par le piètement 1 et qui est en prise sur l'un au moins des coulisseaux 25 porteurs du deuxième mécanisme. Pour régler le siège en hauteur, le passager s'installe sur le siège et manoeuvre les doigts de crantage 27 vers leur position de désengagement. Le baquet 2 tend à se déplacer en hauteur sous l'effet de la traction spontanément exercée par l'organe de manoeuvre 33 du baquet 2. Lorsque le baquet 2 est en position de hauteur souhaitée par le passager, celui-ci libère les doigts de crantage 27 qui sont manoeuvres spontanément par l'organe élastique correspondant 31 en position de crantage pour solidariser le baquet 2 sur le piètement en maintien hyperstatique.

## Revendications

1. Siège pour appareil volant motorisé comprenant un baquet (2) en maintien hyperstatique sur un piètement (1), le baquet (2) étant composé d'une assise (3) rehaussée d'un dossier (4) et le piètement (1) comprenant des longerons (5,6) d'ancrage du siège en position d'utilisation sur un plan d'installation (P), des montants (7,8) étant respectivement solidaires des longerons (5,6) et étant porteurs conjointement par brochage du baquet (2) par l'intermédiaire de goujons (10) axialement étendus, l'une des extrémités de chacun des goujons (10) étant en prise sur une armature (9) du dossier (4) tandis que leur autre extrémité est en prise sur un montant (7,8) dédié,
**caractérisé en ce qu'**il est équipé d'un premier mécanisme articulé de compensation géométrique d'une déformation du plancher, qui associe un montage en rotule des goujons (10) indifféremment sur le montant dédié (7,8) ou sur l'armature (9) du dossier (4), avec un agencement en déformations axiale des goujons (10) entre des appuis axiaux antagonistes qu'ils prennent contre l'armature (9) du dossier (4) et le montant dédié (7,8).

2. Siège selon la revendication 1,
**caractérisé en ce que** les goujons (10) sont axialement déformables suivant une course prédéfinie entre deux positions axiales de butée.

3. Siège selon l'une quelconque des revendications précédentes,
**caractérisé en ce que** la portée sphérique des goujons indifféremment sur le montant dédié (7,8) ou sur l'armature (9) du dossier (4) est limitée à une plage comprise entre 3° et 7°.

4. Siège selon l'une quelconque des revendications précédentes,
**caractérisé en ce que** les goujons (10) sont chacun agencés en :
*) un axe de basculement (13) muni d'épaulements (17,18) de prise d'appuis axiaux antagonistes contre le montant (7,8) et l'armature (9) du dossier (4), et doté d'une tête de rotule (15) apte à coopérer avec un logement (16) ménagé indifféremment dans l'armature (9) du dossier (4) ou dans le montant dédié (7,8), et
*) au moins un manchon élastique (14) axialement déformable enfilé sur l'axe de basculement (13) en interposition axiale entre l'un quelconque au moins des dits épaulements (17,18) et respectivement le montant dédié (7,8) et l'armature (9) du dossier (4) contre lequel il prend appui.

5. Siège selon la revendication 4,
**caractérisé en ce que** le manchon élastique (14) est composé d'un jeu de rondelles empilées et conformées en assiette du type dit « Belleville ».

6. Siège selon l'une quelconque des revendications 4 et 5,
**caractérisé en ce que** les logements (16) de réception des dites têtes de rotule (15) sont des logements borgnes aptes à interdire une échappée de l'extrémité correspondante des axes de basculement (13) hors des logements (16) qui les reçoivent.

7. Siège selon l'une quelconque des revendications précédentes,
**caractérisé en ce que** les goujons (10) sont montés en rotule à l'intérieur d'un dit logement (16) que comportent les montants (7,8) et sont montés mobiles à l'intérieur d'un évidement axial (20) que comporte l'armature (9) du dossier (4).

8. Siège selon l'une quelconque des revendications précédentes,
**caractérisé en ce qu'**il est équipé d'un deuxième mécanisme d'absorption d'énergie induite par un brusque changement d'allure de l'appareil.

9. Siège selon la revendication 8,
**caractérisé en ce que** le deuxième mécanisme comprend au moins deux jeux d'organes qui associent chacun un fusible (22) de retenue du baquet (2) en maintien hyperstatique et un organe déformable de soutien (23) du baquet (2), chaque jeu d'organes (22,23) étant conjointement en prise sur un montant dédié (7,8) et sur l'armature (9) du dossier (4).

10. Siège selon la revendication 9.
**caractérisé en ce que** le fusible (22) et l'organe de soutien (23) de chacun des jeux d'organes sont en prise sur un goujon (10) qui leur est affecté et sur le montant dédié (7,8), et **en ce que** le logement (16) de réception de la tête de rotule (15) du goujon (10) s'étend le long de ce montant dédié (7,8).

11. Siège selon l'une quelconque des revendications précédentes,
**caractérisé en ce qu'**il est équipé de moyens de réglage de la position du baquet en hauteur.

12. Siège selon l'une quelconque des revendications précédentes,
**caractérisé en ce que** les moyens de réglage de la position du baquet (2) en hauteur comprennent un mécanisme de crantage associant au moins un jeu de deux doigts de crantage (27) porteurs du baquet (2) et chacun affectés à un montant dédié (7,8), avec des crans (29) en pluralité (28) de réception alternative des doigts de crantage (27) qui sont ménagés successivement le long de chacun des montants (7,8).

13. Siège selon la revendication 12,
**caractérisé en ce que** chacun des doigts de crantage (27) est porteur du baquet (2) par l'intermédiaire d'un goujon (10) qui leur est affecté et sur lequel ils sont en prise.

14. Siège selon la revendication 13,
**caractérisé en ce que** les doigts de crantage (27) sont en prise sur les goujons (10) par l'intermédiaire des deuxièmes mécanismes correspondants (22,23).

15. Siège selon l'une quelconque des revendications 12 à 14,
**caractérisé en ce que** les doigts de crantage (27) sont guidés en mobilité par l'intermédiaire de coulisseaux (25) qui les supportent respectivement et qui sont montés coulissants le long de glissières correspondantes (16) ménagées à travers les montants (7,8).

16. Siège selon la revendication 15,
**caractérisé en ce que** les coulisseaux (25) constituent en outre des organes de prises sur les montants (7,8) des jeux d'organes (22,23) du deuxième mécanisme, les glissières de réception des coulisseaux (25) étant constituées par les logements (16) de réception des goujons (10).

17. Siège selon l'une quelconque des revendications 12 à 16,
**caractérisé en ce que** les moyens de réglage de la position du baquet en hauteur comprennent des moyens de manoeuvre des doigts de crantage (27) entre une position spontanée de crantage dans laquelle les doigts de crantage (27) sont reçus par l'un des dits crans (29) de la pluralité (28) correspondante et une position de dégagement dans laquelle les doigts de crantage (27) sont extraits hors des crans (29).

18. Siège selon la revendication 17,
**caractérisé en ce que** les moyens de manoeuvre des doigts de crantage (27) comprennent un organe de traction (32) des doigts de crantage (27) en position de dégagement à l'encontre d'un effort antagoniste exercé par un organe élastique (31) de manoeuvre spontanée des doigts de crantage (27) en position de crantage.

19. Siège selon la revendication 18,
**caractérisé en ce que** l'organe de traction (32) est du type à tirette manoeuvrable manuellement.

20. Siège selon l'une quelconque des revendications 11 à 19,
**caractérisé en ce que** les moyens de réglage de la position du baquet (2) en hauteur comprennent au moins un organe de manoeuvre (33) du baquet (2) en position de hauteur.

21. Siège selon la revendication 20,
**caractérisé en ce que** l'organe de manoeuvre (33) du baquet (2) est un organe de manoeuvre spontanée du baquet (2) vers une position haute optimale, qui est taré à une force prédéterminée.

22. Siège selon l'une quelconque des revendications 20 et 21,
**caractérisé en ce que** l'organe de manoeuvre (33) du baquet (2) est placé dans le soubassement du siège délimité entre les longerons (5,6) et est en prise sur au moins l'un des doigts de crantage (27) par l'intermédiaire d'un câble (34) circulant le long d'un jeu de poulies de renvoi (35) montées sur le piètement (1).

## Claims

1. Seat for a powered aircraft, comprising a bucket (2) held in hyperstatic manner on a stand (1), the bucket (2) being made up of a seat bottom (3) with a seat back (4) rising therefrom, and the stand (1) comprising foot members (5,6) for anchoring the seat in its utilisation position on an installation plane (P), leg members (7,8) being secured respectively to the foot members (5,6) and together carrying the bucket (2) pinned thereto via axially extending bolts (10), one of the ends of each of the bolts (10) engaging on a strength member (9) of the seat back (4) while the other end of each of said bolts engages on a dedicated leg member (7,8), **characterised in that** the seat is fitted with a first hinged mechanism for geometrically compensating deformation of the floor, the mechanism associating a ball-joint mounting of the bolts (10) equally well on the dedicated leg member (7,8) or on the strength member (9) of the seat back (4), with an arrangement for axial deformation of the bolts (10) between opposing axial bearing points thereof against the strength member (9) of the seat back (4) and the dedicated leg member (7,8).

2. Seat according to Claim 1, **characterised in that** the bolts (10) are axially deformable over a predefined stroke between two axial abutment positions.

3. Seat according to either one of the preceding claims, **characterised in that** the spherical bearing surface of the bolts equally well on the dedicated leg member (7,8) or on the strength member (9) of the seat back (4) is limited to a range between 3° and 7°.

4. Seat according to any one of the preceding claims, **characterised in that** each of the bolts (10) is arranged as:
*) a tilt pin (13) provided with shoulders (17,18) for the opposing axial bearing points against the leg member (7,8) and the strength member (9) of the seat back (4), and provided with a ball-joint head (15) suitable for cooperating with a housing (16) provided equally well in the strength member (9) of the seat back (4) or in the dedicated leg member (7,8); and
*) at least one axially deformable resilient sleeve (14) mounted on the tilt pin (13) so as to be axially interposed between any one of at least said shoulders (17,18) and respectively the dedicated leg member (7,8) and the strength member (9) of the seat back (4) against which it bears.

5. Seat according to Claim 4, **characterised in that** the resilient sleeve (14) is made up of a stacked set of dish-shaped washers of the "Belleville" type.

6. Seat according to either one of Claims 4 and 5, **characterised in that** the housings (16) receiving said ball-joint heads (15) are blind housings suitable for preventing the corresponding end of the tilt pins (13) from escaping from the housings (16) that receive them.

7. Seat according to any one of the preceding claims, **characterised in that** the bolts (10) are ball-joint mounted inside a said housing (16) included in the leg members (7,8), and are mounted to be movable inside an axial recess (20) included in the strength member (9) of the seat back (4).

8. Seat according to any one of the preceding claims, **characterised in that** it is fitted with a second mechanism for absorbing energy induced by a sudden change in the speed of the aircraft.

9. Seat according to Claim 8, **characterised in that** the second mechanism comprises at least two sets of members, each associating a fuse (22) for retaining the bucket (2) and holding it in a hyperstatic manner, and a deformable member (23) for supporting the bucket (2), each set of members (22,23) together engaging on a dedicated leg member (7,8) and on the strength member (9) of the seat back (4).

10. Seat according to Claim 9, **characterised in that** the fuse (22) and the support member (23) of each of the sets of members engage on a bolt (10) that is assigned thereto and on the dedicated leg member (7,8), and **in that** the housing (16) for receiving the ball-joint head (15) of the bolt (10) extends along this dedicated leg member (7,8).

11. Seat according to any one of the preceding claims, **characterised in that** it is fitted with means for adjusting the height position of the bucket.

12. Seat according to any one of the preceding claims, **characterised in that** the means for adjusting the height position of the bucket (2) comprises a ratchet mechanism associating at least one set of two pawl fingers (27) carrying the bucket (2) and each assigned to a dedicated leg member (7,8), with a plurality (28) of notches (29) for receiving the pawl fingers (27) in alternation, which notches are arranged in succession along each of the leg members (7,8).

13. Seat according to Claim 12, **characterised in that** each of the pawl fingers (27) carries the bucket (2) via a bolt (10) that is assigned thereto and on which they engage.

14. Seat according to Claim 13, **characterised in that** the pawl fingers (27) engage on the bolts (10) via the corresponding second mechanisms (22,23).

15. Seat according to any one of Claims 12 to 14, **characterised in that** the pawl fingers (27) are movably guided by means of slides (25) that respectively support them and which slides are mounted to slide along corresponding slideways (16) formed through the leg members (7,8).

16. Seat according to Claim 15, **characterised in that** the slides (25) also constitute members for engaging the sets of members (22,23) of the second mechanism on the leg members (7,8), the slideways receiving the slides (25) being constituted by the housings (16) for receiving the bolts (10).

17. Seat according to any one of Claims 12 to 16, **characterised in that** the height position adjustment means of the bucket comprises means for driving the pawl fingers (27) between a spontaneous notching position in which the pawl fingers (27) are received in one of said plurality (28) of notches (29), and a disengagement position in which the pawl fingers (27) are extracted from the notches (29).

18. Seat according to Claim 17, **characterised in that** the means for driving the pawl fingers (27) comprises a traction member (32) for pulling the pawl fingers (27) into the disengagement position against an opposing force exerted by a resilient member (31) for spontaneously driving the pawl fingers (27) into the notching position.

19. Seat according to Claim 18, **characterised in that** the traction member (32) is of the manually operable pull rod type.

20. Seat according to any one of Claims 11 to 19, **characterised in that** the height position adjustment means of the bucket (2) comprises at least one member (33) for driving the height position of the bucket (2).

21. Seat according to Claim 20, **characterised in that** the member (33) for driving the bucket (2) is a member for spontaneously driving the bucket (2) towards an optimum height position, which member is rated at a predetermined force.

22. Seat according to either one of Claims 20 and 21, **characterised in that** the member (33) for driving the bucket (2) is placed in the underside of the seat defined between the foot members (5,6) and engages on at least one of the pawl fingers (27) via a cable (34) running along a set of defection pulleys (35) mounted on the stand (1).

## Patentansprüche

1. Sitz für motorisierte Fluggeräte mit einem auf einem Gestell (1) befestigten Schalensitz (2), wobei der Schalensitz aus einer Sitzfläche (3) besteht, die von einer Rückenlehne (4) überragt wird, und das Gestell (1) Längsträger (5, 6) zum Verankern des Sitzes in einer Gebrauchsstellung in einer Installationsebene (P) aufweist, wobei jeweils fest mit den Längsträger (5, 6) verbundene Stützen (7, 8) zusammen mit Bohrungen des Schalensitzes (2) über sich axial erstreckende Bolzen (10) Träger bilden, wobei eines der Enden eines jeden Bolzens (10) in eine Armierung (9) der Rückenlehne (4) eingreift, wohingegen deren anderes Ende in eine entsprechende Stütze (7, 8) eingreift,
**gekennzeichnet durch** einen ersten Gelenkmechanismus zur geometrischen Kompensation einer Verformung des Bodens, der eine kugelgelenkige Montage der Bolzen (10) gleichermaßen an der zugehörigen Stütze (7, 8) oder an der Armatur (9) der Rückenlehne (4) mit einem Anordnen zur axialen Verformung der Bolzen (10) zwischen sich gegenüberliegenden axialen Auflagern verbindet, die sie gegen die Armatur (9) der Rückenlehne (4) und die zugehörige Stütze (7, 8) drücken.

2. Sitz nach Anspruch 1,
**dadurch gekennzeichnet, dass** die Bolzen (10) entlang einem vorgegebenen Weg zwischen zwei axialen Anschlagsstellungen axial verformbar sind.

3. Sitz nach einem der vorstehenden Ansprüche,
**dadurch gekennzeichnet, dass** die Verbiegbarkeit der Bolzen gleichermaßen auf der zugehörigen Stütze (7, 8) oder auf der Armatur (9) der Rückenlehne (4) auf einen Bereich zwischen 3° und 7° begrenzt ist.

4. Sitz nach einem der vorstehenden Ansprüche,
**dadurch gekennzeichnet, dass** die Bolzen (10) sich jeweils zusammensetzen aus:
*) einer Schwenkachse (13), die mit Auflageschultern (17, 18) versehen ist zum axialen sich gegenüberliegenden Andrücken gegen die Stütze (7, 8) und die Armatur (9) der Rückenlehne (4), und die mit einem Kugelgelenkkopf (15) versehen ist, der mit einem Lager (16) zusammenwirken kann, welches gleichermaßen in der Armatur (9) der Rückenlehne (4) oder in der entsprechenden Stütze (7, 8) eingearbeitet ist, und
*) mindestens einer elastischen Muffe (14), die elastisch deformierbar auf die Schwenkachse (13) aufgesteckt ist in einer axialen Zwischenlage zwischen mindestens einer beliebigen der Auflageschultern (17, 18) und der jeweils zugehörigen Stütze (7, 8) und der Armatur (9) der Rückenlehne (4), gegen die sie andrückt.

5. Sitz nach Anspruch 4,
**dadurch gekennzeichnet, dass** die elastische Muffe (14) aus einer Mehrzahl gestapelter Scheiben besteht, um eine "Belleville"-Feder genannte Tellerfeder zu bilden.

6. Sitz nach einem der Ansprüche 4 und 5,
**dadurch gekennzeichnet, dass** die Aufnahmelager (16) der Kugelgelenkköpfe (15) sacklochartige Lager sind, mit denen verhindert werden kann, dass ein entsprechendes Ende der Schwenkachsen (13) aus den Lagern (16) springen kann, die sie aufnehmen.

7. Sitz nach einem der vorstehenden Ansprüche,
**dadurch gekennzeichnet, dass** die Bolzen (10) kugelgelenkig im Inneren des Lagers (16) montiert sind, das die Stützen (7, 8) aufweist, wobei die Bolzen beweglich im Inneren einer axialen Ausnehmung (20) montiert sind, mit der die Armatur (9) der Rückenlehne (4) versehen ist.

8. Sitz nach einem der vorstehenden Ansprüche,
**dadurch gekennzeichnet, dass** er mit einem zweiten Mechanismus zur Absorption von durch abrupte Geschwindigkeitsänderung des Flugzeugs induzierter Energie ausgerüstet ist.

9. Sitz nach Anspruch 8,
**dadurch gekennzeichnet, dass** der zweite Mechanismus mindestens zwei Sätze von Organen aufweist, die jeweils eine Haltesicherung (22) des Schalensitzes (2) in starrer Halterung und ein verformbares Halteorgan (23) des Schalensitzes (2) verbinden, wobei jeder Satz von Organen (22, 23) zusammen mit einer zugehörigen Stütze (7, 8) und mit der Armatur (9) der Rückenlehne (4) in Eingriff steht.

10. Sitz nach Anspruch 9,
**dadurch gekennzeichnet, dass** die Sicherung (22) und das Halteorgan (23) eines jeden der Sätze von Organen in Eingriff mit einem Bolzen (10), der ihnen zugeordnet ist, und mit der zugehörigen Stützte (7, 8) stehen, und **dadurch**, dass sich die Lagerung (16) des Kugelgelenkkopfes (15) des Bolzens (10) entlang der zugehörigen Stütze (7, 8) erstreckt.

11. Sitz nach einem der vorstehenden Ansprüche,
**dadurch gekennzeichnet, dass** er mit Mitteln zum Einstellen der Höhe des Schalensitzes ausgerüstet ist.

12. Sitz nach einem der vorstehenden Ansprüche,
**dadurch gekennzeichnet, dass** die Mittel zur Einstellung der Höhe des Schalensitzes (2) einen Rastmechanismus aufweisen, der mindestens einen Satz von zwei Rastfingern (27), die den Schalensitz (2) tragen und die jeweils einer zugeordneten Stütze (7, 8) zugeordnet sind, mit einer Mehrzahl von Aufnahmerasten (29) verbindet, alternativ Rastfinger (27), die aufeinanderfolgend entlang jeder der Stützen (7, 8) eingearbeitet sind.

13. Sitz nach Anspruch 12,
**dadurch gekennzeichnet, dass** jeder der Rastfinger (27) über einen Bolzen (10), der ihm zugeordnet ist und auf dem diese in Eingriff stehen, den Schalensitz (2) trägt.

14. Sitz nach Anspruch 13,
**dadurch gekennzeichnet, dass** die Rastfinger (27) mit den Bolzen (10) über zweite entsprechende Mechanismen (22, 23) in Eingriff stehen.

15. Sitz nach einem der Ansprüche 12 bis 14,
**dadurch gekennzeichnet, dass** die Rastfinger (27) beweglich mittels Schiebern (25) geführt werden, die sie jeweils tragen und die gleitend entlang der entsprechenden Gleitschienen (16) montiert sind, die durch die Stützen (7, 8) verlaufen.

16. Sitz nach Anspruch 15,
**dadurch gekennzeichnet, dass** die Schieber (25) Mittel zum Eingriff in die Stützen (7, 8) der Sätze von Organen (22, 23) des zweiten Mechanismus darstellen, wobei die Gleitschienen zur Aufnahme der Schieber (25) aus Aufnahmelagern (16) der Bolzen (10) bestehen.

17. Sitz nach einem der Ansprüche 12 bis 16,
**dadurch gekennzeichnet, dass** die Mittel zum Einstellen der Höhe des Schalensitzes Steuermittel für die Rastfmger (27) aufweisen, zur Steuerung zwischen einer spontanen Raststellung, in der die Rastfinger (27) von einer der Rasten (29) der entsprechenden Mehrzahl (28) von Rastfingern aufgenommen sind, und einer Lösestellung, in der die Rastfinger (27) außer Eingriff mit den Rasten (29) stehen.

18. Sitz nach Anspruch 17,
**dadurch gekennzeichnet, dass** die Steuermittel der Rastfinger (27) ein Zugorgan (32) für die Rastfinger (27) aufweisen, die die Rastfinger in Lösestellung bringen, wenn eine entgegengesetzte Kraft von einem elastischen Steuerorgan (31) ausgeübt wird, wobei das Steuerorgan die Rastfinger (27) spontan in eine Verrastungsstellung bringt.

19. Sitz nach Anspruch 18,
**dadurch gekennzeichnet, dass** das Zugorgan (32) eine manuell handhabbare Zuggarnitur ist.

20. Sitz nach einem der Ansprüche 11 bis 19,
**dadurch gekennzeichnet, dass** die Mittel zum Einstellen der Höhe des Schalensitzes (2) mindestens ein Steuerorgan (33) des Schalensitzes (2) zur Höheneinstellung aufweisen.

21. Sitz nach Anspruch 20,
**dadurch gekennzeichnet, dass** das Steuerorgan (33) des Schalensitzes (2) ein Steuerorgan zum spontanen Steuern des Schalensitzes (2) in eine optimale Ruhestellung ist, welche an eine vorbestimmte Kraft tariert ist.

22. Sitz nach einem der Ansprüche 20 und 21,
**dadurch gekennzeichnet, dass** das Steuerorgan (33) des Schalensitzes (2) unterhalb des Sitzes an einer Stelle angeordnet ist, die von den Längsträgern (5, 6) begrenzt ist, wobei das Steuerorgan mit mindestens einem der Rastfinger (27) über ein Kabel (34) verbunden ist, welches um einen Satz Umlenkrollen (35) umläuft, die am Gestell montiert sind.
